# EUROPEAN PATENT APPLICATION

(11) **EP 1 903 252 A1**
(43) Date of publication of application: **26.03.2008**
(21) Application number: 07075790.1
(22) Date of filing: 11.09.2007
(51) Int. Cl.: F16F 9/53

(54) **Magnetorheological damper**

(30) Priority: 19.09.2006 US 523401
(71) Applicant: Delphi Technologies, Inc., Troy, Michigan 48007 (US)
(72) Inventor: Jensen, Eric Lee, Dayton, OH 45429 (US); Hurtt, Michael W., Waynesville, OH 45068 (US); Shal, David A., Bellbrook, OH 45305 (US); Goecke, Michelle Kay, Dayton, OH 45409 (US); Prevot, Benoit, 78400 Chatou (FR); Francisco, Christophe, 77420 Champs-sur-Marne (FR); Marchand, Jocelyn, 92300 Levallois Perret (FR); Cantuern, Lilian, 60300 Senlis (FR)
(74) Representative: Denton, Michael John

(57) **Abstract**

A magnetorheological (MR) damper (110) includes a damper tube (112), a movable non-MR damper piston (114), and a non-movable MR damper piston (116). The damper tube has substantially hermetically separated first and second chambers (118 and 120), wherein the first chamber (118) contains a non-MR fluid (122) and the second chamber (120) contains an MR fluid (124). The non-MR damper piston is located in the first chamber and is slidable with respect to the damper tube. The MR damper piston has a longitudinal axis (126) and an electric coil (128), is located in the second chamber, and is fixedly attached to the damper tube. Sliding the non-MR damper piston with respect to the damper tube causes movement of at least some of the MR fluid longitudinally past the electric coil.

## Description

### TECHNICAL FIELD

The present invention relates generally to piston dampers, and more particularly to a magnetorheological (MR) damper.

### BACKGROUND OF THE INVENTION.

Conventional piston dampers include MR dampers having a tube containing an MR fluid and having an MR piston assembly including a piston which slideably engages the tube and including a rod which has a first end attached to the piston and a second end extending outside the tube. The MR fluid passes through an orifice of the MR piston. Exposing the MR fluid in the orifice to a varying magnetic field, generated by providing a varying electric current to an electric coil of the MR piston, varies the damping effect of the MR fluid in the orifice providing variably-controlled damping of relative motion between the MR piston and the tube. The electric current is varied to accommodate varying operating conditions, as is known to those skilled in the art. The tube and the rod are attached to separate structures to dampen relative motion of the two structures along the direction of piston travel.

What is needed is an improved magnetorheological piston damper.

### SUMMARY OF THE INVENTION

In a first expression of a first embodiment of the invention, a magnetorheological (MR) damper includes a damper tube, a movable non-MR damper piston, and a non-movable MR damper piston. The damper tube has substantially hermetically separated first and second chambers, wherein the first chamber contains a non-MR fluid and the second chamber contains an MR fluid. The non-MR damper piston is located in the first chamber and is slidable with respect to the damper tube. The MR damper piston has a longitudinal axis and an electric coil, is located in the second chamber, and is fixedly attached to the damper tube. Sliding the non-MR damper piston with respect to the damper tube causes movement of at least some of the MR fluid longitudinally past the electric coil.

In a second expression of a first embodiment of the invention, a magnetorheological (MR) damper includes a damper tube, a movable first gas cup, a movable non-MR damper piston, and a non-movable MR damper piston. The damper tube has first and second chambers. The first gas cup is located within the damper tube, is slidable with respect to the damper tube, and substantially hermetically separates the first and second chambers. The first chamber contains a non-MR fluid and the second chamber contains an MR fluid. The non-MR damper piston is located in the first chamber and is slidable with respect to the damper tube. The MR damper piston has a longitudinal axis and an electric coil, is located in the second chamber, and is fixedly attached to the damper tube. Sliding the non-MR damper piston with respect to the damper tube causes movement of at least some of the MR fluid longitudinally past the electric coil.

In a first expression of a second embodiment of the invention, a magnetorheological (MR) damper includes a damper tube, a flexible first membrane, a movable non-MR damper piston, and a non-movable MR damper piston. The damper tube has first and second chambers. The first membrane is located within the damper tube, is fixedly attached to the damper tube, and substantially hermetically separates the first and second chambers. The first chamber contains a non-MR fluid and the second chamber contains an MR fluid. The non-MR damper piston is located in the first chamber and is slidable with respect to the damper tube. The MR damper piston has a longitudinal axis and an electric coil, is located in the second chamber, and is fixedly attached to the damper tube. Sliding the non-MR damper piston with respect to the damper tube causes movement of at least some of the MR fluid longitudinally past the electric coil.

Several benefits and advantages are derived from one or more of the expressions of several embodiments of the invention. In one example, the presence of the less expensive non-MR fluid (such as standard hydraulic fluid) reduces the volume of the more expensive MR fluid required by the MR damper reducing the cost of the MR damper. In the same or a different example, the MR damper has a faster operational speed than non-MR dampers employing hydraulic valves such as in those used in conventional CV-RTD (continuously variable - real-time damping) automotive systems.

### BRIEF DESCRIPTION OF THE DRAWINGS

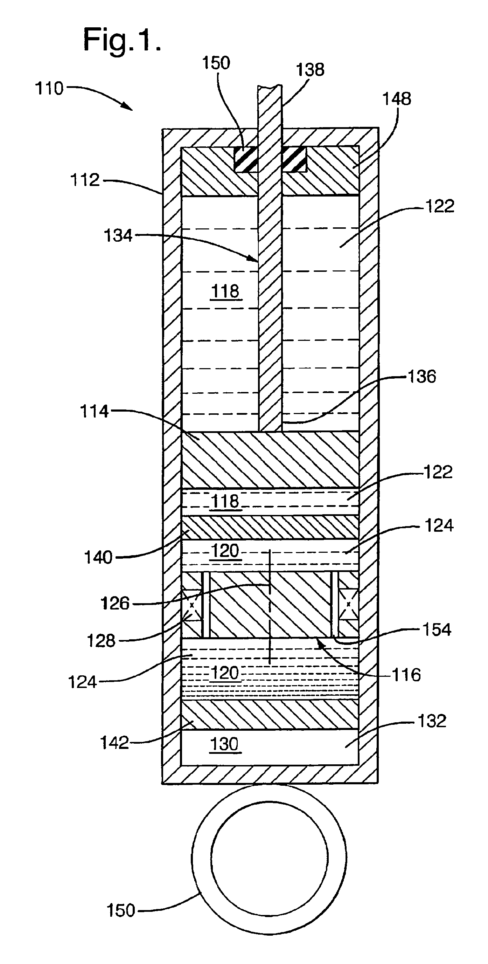

Figure 1 is a longitudinal cross-sectional view of a first embodiment of a magnetorheological (MR) damper of the invention, wherein the damper includes a movable non-MR damper piston, a non-movable MR damper piston, and movable first and second gas cups, and wherein the damper is shown in a compressed state;

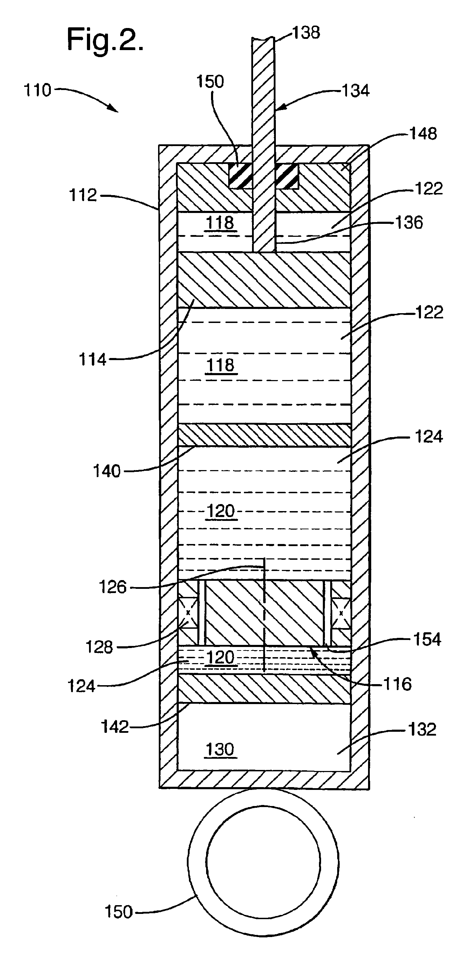

Figure 2 is a view, as in Figure 1, but showing the damper in an extended state;

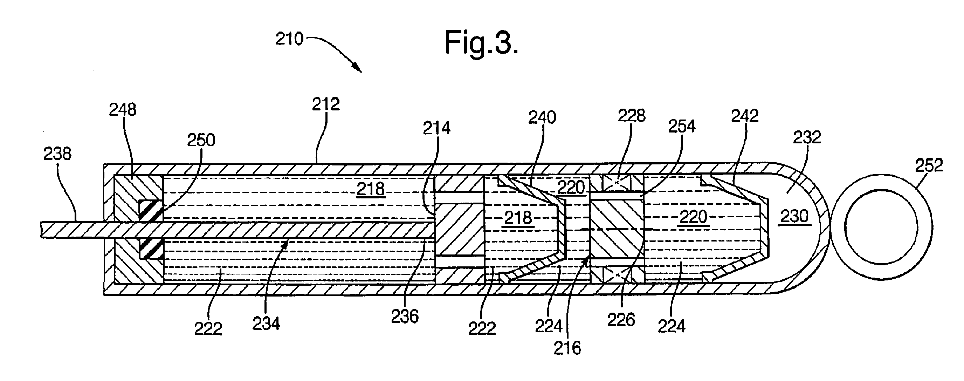

Figure 3 is a longitudinal cross-sectional view of a second embodiment of an MR damper assembly of the invention, wherein the damper includes a movable non-MR damper piston, a non-movable MR damper piston, and flexible first and second membranes, and wherein the first, second, and third chambers are substantially coaxially aligned with the longitudinal axis of the MR damper piston;

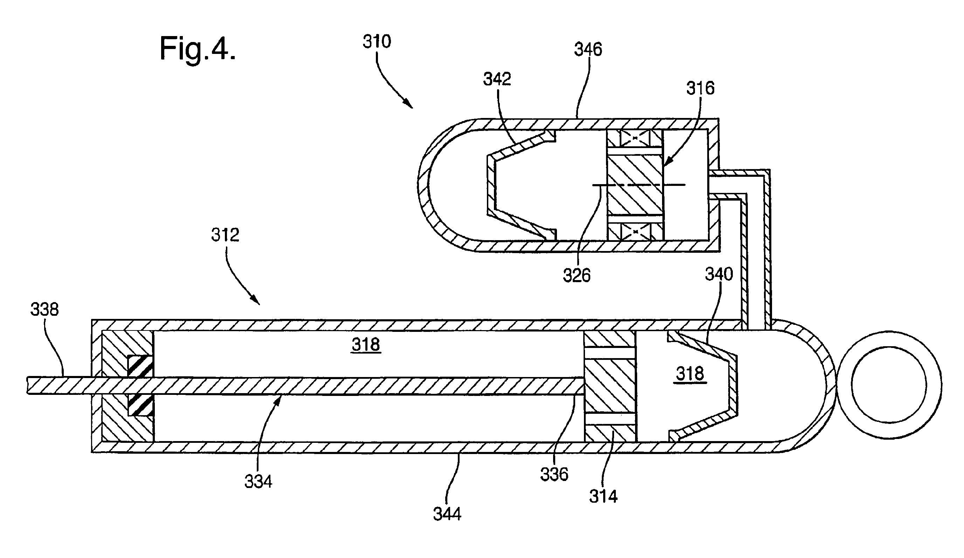

Figure 4 is a view, as in Figure 3 but of a first alternate embodiment of the damper of Figure 3, wherein the damper tube has first and second tube portions, wherein the MR damper piston and one membrane are located in the second tube portion, and wherein the first tube portion is not coaxially aligned with the longitudinal axis of the MR damper piston; and

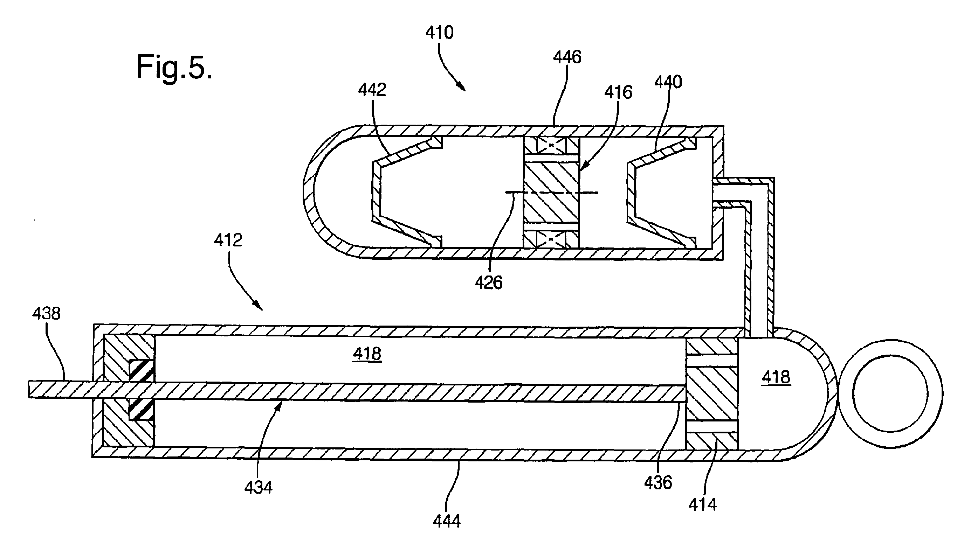

Figure 5 is a view, as in Figure 3 but of a second alternate embodiment of the damper of Figure 3, wherein the damper tube has first and second tube portions, wherein the MR damper piston and both membranes are located in the second tube portion, and wherein the first tube portion is not coaxially aligned with the longitudinal axis of the MR damper piston.

### DESCRIPTION OF THE PREFERRED EMBODIMENTS

Referring now to the drawings, wherein like numerals represent like elements throughout, Figures 1 and 2 show a first embodiment of the present invention. A first expression of the embodiment of Figures 1-2 is for a magnetorheological (MR) damper 110 including a damper tube 112, a movable non-MR damper piston 114, and a non-movable MR damper piston 116. The damper tube 112 has substantially hermetically separated first and second chambers 118 and 120, wherein the first chamber 118 contains a non-MR fluid 122 and the second chamber 120 contains an MR fluid 124. The non-MR damper piston 114 is located in the first chamber 114 and is slidable with respect to the damper tube 112. The MR damper piston 116 has a longitudinal axis 126 and an electric coil 128, is located in the second chamber 120, and is fixedly attached to the damper tube 112. Sliding the non-MR damper piston 114 with respect to the damper tube 112 causes movement of at least some of the MR fluid 124 longitudinally past the electric coil 128.

In one enablement of the first expression of the embodiment of Figures 1-2, the damper tube 112 has a third chamber 130 substantially hermetically separated from the second chamber 120, wherein the third chamber 130 contains a gas 132. In one example, the gas 132 is a compressed gas. In one variation, the second chamber 120 is disposed between the first and the third chambers 118 and 130. In one modification, the MR damper 110 also includes a rod 134 having a first end 136 disposed in the first chamber 118 and attached to the non-MR damper piston 114 and having a second end 138 extending outside the damper tube 112.

A second expression of the embodiment of Figures 1-2 is for a magnetorheological (MR) damper 110 including a damper tube 112, a movable first gas cup 140, a movable non-MR damper piston 114, and a non-movable MR damper piston 116. The damper tube 112 has first and second chambers 118 and 120. The first gas cup 140 is disposed within the damper tube 112, is slidable with respect to the damper tube 112, and substantially hermetically separates the first and second chambers 118 and 120. The first chamber 118 contains a non-MR fluid 122 and the second chamber 120 contains an MR fluid 124. The non-MR damper piston 114 is located in the first chamber 114 and is slidable with respect to the damper tube 112. The MR damper piston 116 has a longitudinal axis 126 and an electric coil 128, is located in the second chamber 120, and is fixedly attached to the damper tube 112. Sliding the non-MR damper piston 114 with respect to the damper tube 112 causes movement of at least some of the MR fluid 124 longitudinally past the electric coil 128.

In one enablement of the second expression of the embodiment of Figures 1-2, the damper tube 112 has a third chamber 130 substantially hermetically separated from the second chamber 120, wherein the third chamber 130 contains a gas 132. In one illustration, the MR damper 110 also includes a movable second gas cup 142 disposed within the damper tube 112, slidable with respect to the damper tube 112, and substantially hermetically separating the second and third chambers 120 and 130. In one variation, the second chamber 120 is disposed between the first and the third chambers 118 and 130. In one arrangement, the first, second and third chambers 118, 120 and 130 are substantially coaxially aligned with the longitudinal axis 126 of the MR damper piston 116. In one modification, the MR damper 110 also includes a rod 134 having a first end 136 disposed in the first chamber 118 and attached to the non-MR damper piston 114 and having a second end 138 extending outside the damper tube 112.

In one employment of the second expression of the embodiment of Figures 1-2, the MR damper 110 includes a rod guide 148, a dynamic seal 150, and a mounting ring 152, wherein the non-MR fluid 124 in the first chamber 118 is hydraulic fluid such as conventional shock oil. In one operation, as the non-MR damper piston 114 moves downward (in compression, as shown in Figure 1), the volume of the rod 134 displaces the first gas cup 140 downward which forces the MR fluid 124 through a passageway 154 in the MR damper piston 116 (and/or a gap, not shown, between the MR damper piston 116 and the damper tube 112) that is surrounded by a magnetic field created by the electric coil 128. This displaces the second gas cup 142 downward. The field strength generated creates a shear stress in the MR fluid 124 as the MR fluid 124 is pushed through the passageway 154 longitudinally past the electric coil 128. This creates a pressure drop that adds to the damping force created by the non-MR damper piston 114. During extension (as shown in Figure 2), the pressure of the gas 132 contained in the third chamber 130 displaces the second gas cup 142 upward which forces the MR fluid 124 back through the passageway 154 of the MR damper piston 116. This displaces the first gas cup 140 upward. Any pressure drop caused by the magnetic field in the passageway 154 adds damping force to that created by the non-MR damper piston 114.

Figure 3 shows a second embodiment of the present invention. A first expression of the embodiment of Figure 3 is for a magnetorheological (MR) damper 210 including a damper tube 212, a flexible first membrane 240, a movable non-MR damper piston 214, and a non-movable MR damper piston 216. The damper tube 212 has first and second chambers 118 and 120. The first membrane 240 is located within the damper tube 212, is fixedly attached to the damper tube 212, and substantially hermetically separates the first and second chambers 218 and 220. The first chamber 218 contains a non-MR fluid 222 and the second chamber 220 contains an MR fluid 224. The non-MR damper piston 214 is located in the first chamber 218 and is slidable with respect to the damper tube 212. The MR damper piston 216 has a longitudinal axis 226 and an electric coil 228, is located in the second chamber 220, and is fixedly attached to the damper tube 212. Sliding the non-MR damper piston 214 with respect to the damper tube 212 causes movement of at least some of the MR fluid 224 longitudinally past the electric coil 228.

In one enablement of the first expression of the embodiment of Figure 3, the damper tube 212 has a third chamber 230 containing a gas 232. In one example, the gas 232 is a compressed gas. In one configuration, the MR damper 210 also includes a flexible second membrane 242 disposed within the damper tube 212, fixedly attached to the damper tube 212, and substantially hermetically separating the second and third chambers 220 and 230. In one variation, the second chamber 220 is disposed between the first and the third chambers 218 and 230.

In one arrangement, as seen in Figure 3, the first, second and third chambers 218, 220 and 230 are substantially coaxially aligned with the longitudinal axis 226 of the MR damper piston 216. In one modification, the MR damper 210 also includes a rod 234 having a first end 236 disposed in the first chamber 218 and attached to the non-MR damper piston 214 and having a second end 238 extending outside the damper tube 212.

In a first alternate arrangement, as seen in the first alternate embodiment of Figure 4, the damper tube 312 has connected first and second tube portions 344 and 346. In this arrangement, the non-MR damper piston 314 and the first membrane 340 are disposed in the first tube portion 344, and the MR damper piston 316 and the second membrane and 342 are disposed in the second tube portion 346. In this arrangement, the second tube portion 346 is substantially coaxially aligned with the longitudinal axis 326 of the MR damper piston 316, and the first tube portion 344 is not coaxially aligned with the longitudinal axis 326 of the MR damper piston 316. In one modification, the MR damper 310 also includes a rod 334 having a first end 336 disposed in the first chamber 318 and attached to the non-MR damper piston 314 and having a second end 338 extending outside the first tube portion 344. It is noted that the damper stroke is increased in the embodiment of Figure 4 over that of the embodiment of Figure 3.

In a second alternate arrangement, as seen in the second alternate embodiment of Figure 5, the damper tube 412 has connected first and second tube portions 444 and 446. In this arrangement, the non-MR damper piston 414 is disposed in the first tube portion 444, and the MR damper piston 416 and the first and second membranes 440 and 442 are disposed in the second tube portion 446. In this arrangement, the second tube portion 446 is substantially coaxially aligned with the longitudinal axis 426 of the MR damper piston 416, and the first tube portion 444 is not coaxially aligned with the longitudinal axis 426 of the MR damper piston 416. In one modification, the MR damper 410 also includes a rod 434 having a first end 436 disposed in the first chamber 418 and attached to the non-MR damper piston 414 and having a second end 438 extending outside the first tube portion 444. It is noted that the damper stroke is increased in the embodiment of Figure 5 over that of the embodiment of Figure 4.

In one employment of the first expression of the embodiment of Figure 3, the MR damper 210 includes a rod guide 248, a dynamic seal 250, and a mounting ring 252, wherein the non-MR fluid 224 in the first chamber 218 is hydraulic fluid such as conventional shock oil. In one operation, as the non-MR damper piston 214 moves to the right (in compression, as shown in Figure 3), the volume of the rod 234 flexes the first membrane 240 to the right which forces the MR fluid 224 through a passageway 254 in the MR damper piston 216 (and/or a gap, not shown, between the MR damper piston 216 and the damper tube 212) that is surrounded by a magnetic field created by the electric coil 228. This flexes the second membrane 242 to the right. The field strength generated creates a shear stress in the MR fluid 224 as the MR fluid 224 is pushed through the passageway 254 longitudinally past the electric coil 228. This creates a pressure drop that adds to the damping force created by the non-MR damper piston 214. During extension (not shown), the pressure of the gas 232 contained in the third chamber 230 flexes the second membrane 242 to the left which forces the MR fluid 124 back through the passageway 154 of the MR damper piston 116. This flexes the first membrane 240 to the left. Any pressure drop caused by the magnetic field in the passageway 254 adds damping force to that created by the non-MR damper piston 214.

Several benefits and advantages are derived from one or more of the expressions of several embodiments of the invention. In one example, the presence of the less expensive non-MR fluid (such as standard hydraulic fluid) reduces the volume of more expensive MR fluid required by the MR damper reducing the cost of the MR damper. In the same or a different example, the MR damper has a faster operational speed than non-MR dampers employing hydraulic valves such as in those used in conventional CV-RTD (continuously variable - real-time damping) automotive systems.

The foregoing description of several expressions and embodiments of the invention has been presented for purposes of illustration. It is not intended to be exhaustive or to limit the invention to the precise form disclosed, and obviously many modifications and variations are possible in light of the above teaching. It is intended that the scope of the invention be defined by the claims appended hereto.

## Claims

1. A magnetorheological (MR) damper (110) comprising:
a) a damper tube (112) having substantially hermetically separated first and second chambers (118 and 120), wherein the first chamber (118) contains a non-MR fluid (122) and the second chamber (120) contains an MR fluid (124);
b) a movable non-MR damper piston (114) disposed in the first chamber and slidable with respect to the damper tube; and
c) a non-movable MR damper piston (116) having a longitudinal axis (126) and an electric coil (128), disposed in the second chamber, and fixedly attached to the damper tube, wherein sliding the non-MR damper piston with respect to the damper tube causes movement of at least some of the MR fluid longitudinally past the electric coil.

2. The MR damper of claim 1, wherein the damper tube has a third chamber (130) substantially hermetically separated from the second chamber, and wherein the third chamber contains a gas (132).

3. The MR damper of claim 2, wherein the second chamber is disposed between the first and the third chambers.

4. The MR damper of claim 3, also including a rod (134) having a first end (136) disposed in the first chamber and attached to the non-MR damper piston and having a second end (138) extending outside the damper tube.

5. A magnetorheological (MR) damper (110) comprising:
a) a damper tube (112) having first and second chambers (118 and 120);
b) a movable first gas cup (140) disposed within the damper tube, slidable with respect to the damper tube, and substantially hermetically separating the first and second chambers, wherein the first chamber (118) contains a non-MR fluid (122) and the second chamber (120) contains an MR fluid (124);
c) a movable non-MR damper piston (114) disposed in the first chamber and slidable with respect to the damper tube; and
d) a non-movable MR damper piston (116) having a longitudinal axis (126) and an electric coil (128), disposed in the second chamber, and fixedly attached to the damper tube, wherein sliding the non-MR damper piston with respect to the damper tube causes movement of at least some of the MR fluid longitudinally past the electric coil.

6. The MR damper of claim 5, wherein the damper tube has a third chamber (130) containing a gas (132).

7. The MR damper of claim 6, also including a movable second gas cup (142) disposed within the damper tube, slidable with respect to the damper tube, and substantially hermetically separating the second and third chambers.

8. The MR damper of claim 7, wherein the second chamber is disposed between the first and the third chambers.

9. The MR damper tube of claim 8, wherein the first, second and third chambers are substantially coaxially aligned with the longitudinal axis of the MR damper piston.

10. The MR damper of claim 9, also including a rod (134) having a first end (136) disposed in the first chamber and attached to the non-MR damper piston and having a second end (138) extending outside the damper tube.

11. A magnetorheological (MR) damper (210) comprising:
a) a damper tube (212) having first and second chambers (218 and 220);
b) a flexible first membrane (240) disposed within the damper tube, fixedly attached to the damper tube, and substantially hermetically separating the first and second chambers, wherein the first chamber (218) contains a non-MR fluid (222) and the second chamber (220) contains an MR fluid (224);
c) a movable non-MR damper piston (214) disposed in the first chamber and slidable with respect to the damper tube; and
d) a non-movable MR damper piston (216) having a longitudinal axis (226) and an electric coil (228), disposed in the second chamber, and fixedly attached to the damper tube, wherein sliding the non-MR damper piston with respect to the damper tube causes movement of at least some of the MR fluid longitudinally past the electric coil.

12. The MR damper of claim 11, wherein the damper tube has a third chamber (230) containing a gas (232).

13. The MR damper of claim 12 also including a flexible second membrane (242) disposed within the damper tube, fixedly attached to the damper tube, and substantially hermetically separating the second and third chambers.

14. The MR damper of claim 13, wherein the second chamber is disposed between the first and the third chambers.

15. The MR damper of claim 14, wherein the first, second and third chambers are substantially coaxially aligned with the longitudinal axis of the MR damper piston.

16. The MR damper of claim 15, also including a rod (234) having a first end (236) disposed in the first chamber and attached to the non-MR damper piston and having a second end (238) extending outside the damper tube.

17. The MR damper (310) of claim 14, wherein the damper tube (312) has connected first and second tube portions (344 and 346), wherein the non-MR damper piston (314) and the first membrane (340) are disposed in the first tube portion (344), wherein the MR damper piston (316) and the second membrane (342) are disposed in the second tube portion (346), wherein the second tube portion is substantially coaxially aligned with the longitudinal axis (326) of the MR damper piston, and wherein the first tube portion is not coaxially aligned with the longitudinal axis of the MR damper piston.

18. The MR damper of claim 17, also including a rod (334) having a first end (336) disposed in the first chamber (318) and attached to the non-MR damper piston and having a second end (338) extending outside the first tube portion.

19. The MR damper (410) of claim 14, wherein the damper tube (412) has connected first and second tube portions (444 and 446), wherein the non-MR damper piston (416) is disposed in the first tube portion (444), wherein the MR damper piston (416) and the first and second membranes (440 and 442) are disposed in the second tube portion (446), wherein the second tube portion is substantially coaxially aligned with the longitudinal axis (426) of the MR damper piston, and wherein the first tube portion is not coaxially aligned with the longitudinal axis of the MR damper piston.

20. The MR damper of claim 19, also including a rod (434) having a first end (436) disposed in the first chamber (418) and attached to the non-MR damper piston and having a second end (438) extending outside the first tube portion.
